# EUROPEAN PATENT APPLICATION

(11) **EP 2 789 233 A1**
(43) Date of publication of application: **15.10.2014**
(21) Application number: 14161569.0
(22) Date of filing: 25.03.2014
(51) Int. Cl.: A01M 23/30

(54) **Animal trap**

(30) Priority: 04.04.2013 GB 201306076
(71) Applicant: Cooper, Robert, Swadlincote, Derbyshire DE12 8ED (GB)
(72) Inventor: Cooper, Robert, Swadlincote, Derbyshire DE12 8ED (GB)
(74) Representative: Sales, Robert Reginald

(57) **Abstract**

A mouse trap 10 with a metal base plate 12 upon which is mounted a wooden base member 14, with a free part 16 of the base plate 12 extending beyond an end of the base member 14. A sprung catcher member 30 is provided on the base member 14, with a laterally extending handle part 32 to permit manual handling of the member 30.

## Description

This invention relates to animal traps, and particularly but not exclusively mouse traps.

Mouse traps have been available for many years, and many of these include a trap member connected to a strong spring, and a retention arrangement. The trap is arranged such that a mouse can disengage the retention arrangement on the sprung member, which causes the mouse to be trapped by the trap member.

Whilst such traps have been successful at catching mice, they can be difficult to set by persons, and there is a distinct danger of a person's finger becoming trapped during the setting of such a mouse trap, which can be very painful and also cause injury.

According to the present invention there is provided an animal trap, the trap including a base plate, a base member mounted on the plate such that a part of the plate extends beyond the base member, a catcher member pivotally mounted to the base member so as to be movable between a set position and a trapped position engaging against the base member, the catcher member being spring urged to the trapped position, a retention arrangement for retaining the catcher member in the set position, which retention arrangement can be disengaged by a mouse on the base member such that the catcher member traps the mouse against the base member, a lock arrangement manually selectively engagable with the catcher member to hold the catcher member in the set position, a handle part being provided on the catcher member which extends to one side of the base member.

The lock arrangement may comprise a pivotally movable member selectively movable between a position against which the catcher member can engage to retain the same catcher member in the set position.

In one embodiment the lock arrangement member is pivotally mounted about an axis perpendicular to the base plate.

The lock arrangement member may be pivotally mounted to the base plate, and may be mounted to a part of the base plate beyond the base member.

In a further embodiment the lock arrangement member is pivotally mounted about an axis parallel to the base plate.

The lock arrangement member may be mounted to the side of the base member.

The base plate may include an extra strip. The extra strip may be perpendicular to the base plate, and may be located on a one side of the base plate.

The lock arrangement member may be pivotally mounted to the strip.

The catcher member may comprise a profiled member, part of which defines the handle part. The catcher member may comprise a profiled elongate member, which elongate member may substantially extend in a rectangle, with the handle part extending outwardly from the rectangle.

The base member may include a trap part which is movably mounted to the remainder of the base member, with a part of the retention arrangement provided on the trap part such that movement thereof can disengage the retention arrangement.

A link member may extend from the remainder of the base member to be selectively engagable with the trap part, and when engaged with the trap part can engage with the catcher member to retain same in the set position.

An embodiment of the present invention will now be described by way of example only, and with reference to the accompanying drawings, in which:-
Fig. 1 is a plan view of an animal trap according to the invention in a set position with a lock arrangement applied;
Fig. 2 is a similar view to fig. 1 but with the lock arrangement not applied;
Fig. 3 is a similar view to fig. 1 but with the trap in a trapped position;
Fig. 4 is a perspective view of the trap of fig. 1 in the condition shown in fig. 2 and;
Fig. 5 is a side view of the trap of fig. 1 in the condition shown in fig. 1.
Fig. 6 is a plan view of a second arrangement according to the invention in a set position with a lock arrangement applied; and
Fig. 7 is a perspective view of the trap of fig. 6 but with the lock arrangement not applied.

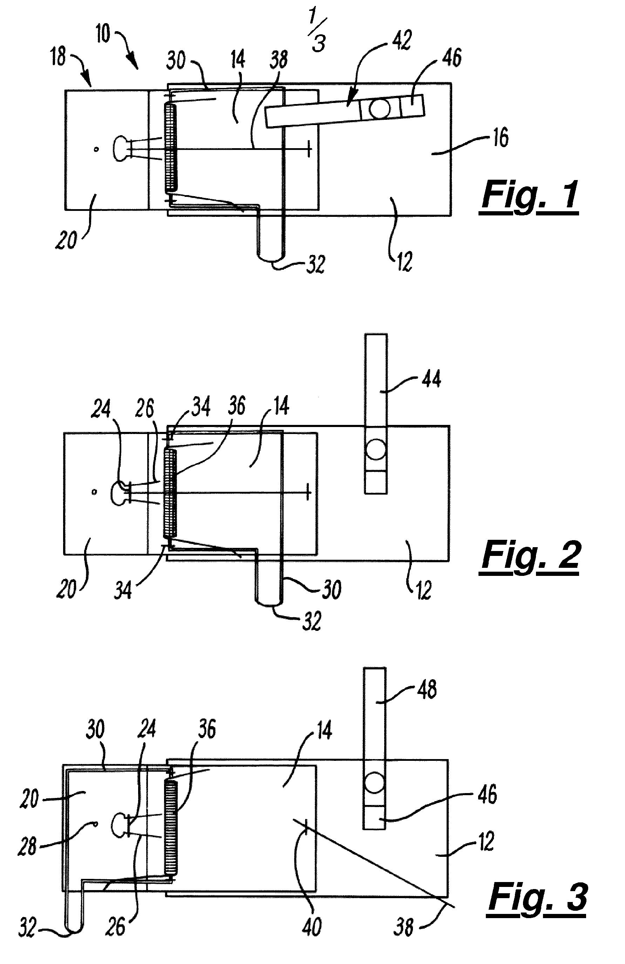

Figs. 1 to 5 of the drawings show an animal trap in the form of a mouse trap 10. The mouse trap comprises a metal base plate 12 upon which is mounted a wooden base member 14. The base plate 12 extends under part of the base member 14 with a free part 16 of the base plate 12 extending beyond an end of the base member 14.

The base member 14 comprises a main body and an end part 18 away from the free part 16. The end part 18 is in the form of a block 20 cut away from the remainder of the base member 14 leaving a relatively thin part 22 therebeneath, with the block 20 freely moveable relative to the rest of the base member 14.

The block 20 is connected to the remainder of the base member 14 by an n-shaped staple 24 on the block 20 which receives a profiled staple 26 extending from the main body of the base member 14, with a constriction in the profiled staple 26 locating in the staple 24 to permit a certain amount of relative movement therebetween. An upstanding spike 28 is provided on the upper face of the block 20 engagable with a mouse being caught on the trap 10.

The trap 10 also includes a catcher member 30 which is in the form of a generally rectangular shaped length of wire, with an extension forming a handle part 32 which extends sideways beyond the base member 14. The catcher member 30 is mounted to the main part of the base member 14 adjacent the block 20. The catcher member 30 is rotatably mounted to the base member 14 by two staples 34. A spring 36 extends around the catcher member 30 between the two staples 34 and urges the catcher member 30 towards the block 20 to the position shown in fig. 3.

A retention bar 38 extends from a staple 40 in the top of the base member 14 adjacent the end thereof by the free part 16. The free end of the retention bar 38 can locate in the staple 24 when the block 20 is tipped back towards the remainder of the base member 14, and in this position the retention bar 38 can locate on top of the catcher member 30 to retain same in a set position as shown in figs. 1, 2, 4 and 5.

A lock arrangement 42 is provided in the form of a profiled bar 44 which has a first part 46 pivotally mounted to the free part 16, which extends to a horizontal part 48 which locates at a height a little above the base member 14, and can be pivoted to extend thereabove.

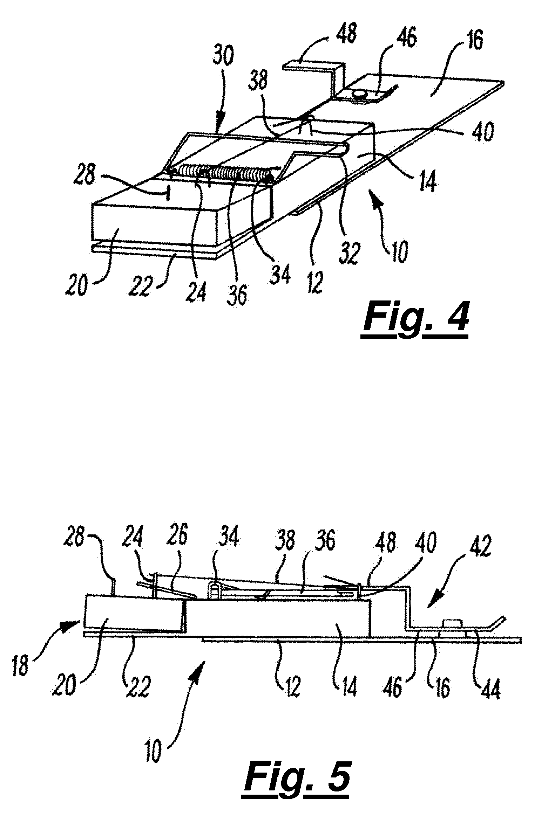

In use the trap 10 can be moved to a set position from an unset position for example as shown in fig. 3. Firstly the catcher member 30 is pivoted back towards the free part 16 and can be retained in position against the top of the main part of the base member 14 by pivoting the profiled bar 44 to extend thereabove. This will be moving the profiled bar 44 from the position shown in fig. 2 to the position shown in figs. 1 and 5. The trap 10 can then be set by locating the free end of the retention bar 38 in the staple 24, which will generally require some movement of the block 20.

Once in this condition the trap 10 can be located in a required place and appropriate bait located on the block 20. The profiled bar 44 can then be pivoted from a position locating above the catcher member 30 for instance to the position shown in fig. 2 meaning the trap 10 is now fully set. If for instance a mouse steps on the block 20 this is likely to urge the staple 24 off the retention bar 38. This will release the retention bar 38 causing the catcher member 30 to pivot quickly onto the block 20 to trap and potentially kill the mouse.

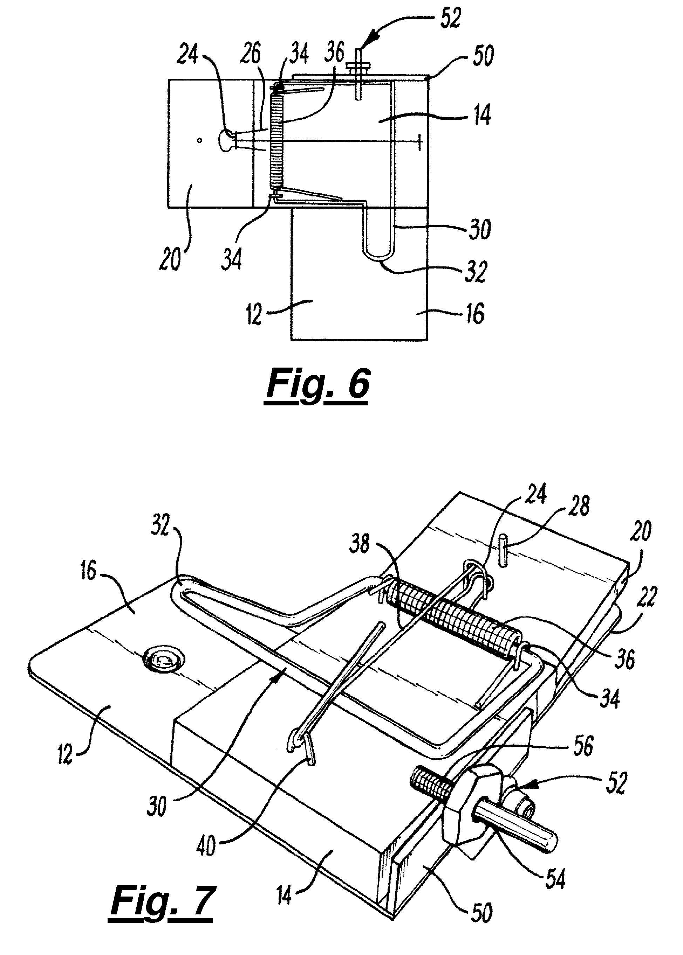

Figures 6 and 7 show a second animal trap 11 according to the invention. Many features of the second animal trap 11 are similar to those previously described, and where features are the same or similar the same reference numerals have been used and these features will not be described again for the sake of brevity.

The base plate 12 of the second animal trap 11 extends under part of the base member 14 with the free part 16 of the base plate 12 in this instance extending beyond a side of the base member 14 such that the free part 16 is located under the handle part 32. The base plate 12 includes an extra strip 50, which extra strip 50 extends perpendicularly from the base plate 12, along the opposite side of the base member 14 to the free part 16.

An alternative lock arrangement 52 is provided. The lock arrangement 52 has an arm 54 which is pivotally mounted to the extra strip 50, about an axis parallel to the base plate 12. The arm 54 at its upper end mounts a finger 56 which extends perpendicularly either side from the arm 54. An outer part of the finger 56 can be manually engaged by a user to set the lock arrangement 42.

An inner end of the finger 56 is engageable on top of the base member 14 and movable in an arc thereabove. The arm 54 is moveable between a safety position resting on the catcher member 30 as shown in Fig. 6, to a set position resting on the base member 14 clear of the catcher member 30 as shown in Fig. 7.

In use the second animal trap 11 can be moved from an unset position to a set position, as shown in fig. 7. Firstly the catcher member 30 is pivoted back towards the free part 16 and can be retained in position against the top of the main part of the base member 14 by moving the lock arrangement 52 to a safety position as described above. The trap 10 can then be set by locating the free end of the retention bar 38 in the staple 24, which will generally require some movement of the block 20.

Once in this condition the trap 11 can be located in a required place and appropriate bait located on the block 20. The lock arrangement 52 can then be moved to a set position as described above. The trap 11 will now be in a fully set condition as shown in Fig. 7.

There are thus described mouse traps with a number of advantageous features. The lock arrangement means that the trap can be safely moved in a set position without the danger of inadvertent release potentially onto a person's fingers. Also the lock arrangement can be used whilst setting the trap to again prevent inadvertent release thereof.

The handle part enables the catcher member to be moved against the relatively strong spring by a person with their hand to the side of the base member. If for instance a person were to slip or accidentally let go of the catcher member, as the handle part is to the side of the base member, a person's fingers should not become trapped between the base member and the catcher member.

The provision of the base plate means that it is easier to handle the trap when setting it and/or moving it, whilst keeping one's hand clear particularly of the catcher member.

Various other modifications may be made without departing from the scope of the invention. For instance the lock arrangement may take a different format. For instance a pivoted arrangement could be provided mounted to the side of the base member, with a part which can again locate above the catcher member in a set position. The mouse trap could be retained in a set position in a different manner. The handle part could be a different shape and/or differently formed.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. An animal trap, the trap including a base plate, a base member mounted on the plate such that a part of the plate extends beyond the base member, a catcher member pivotally mounted to the base member so as to be movable between a set position and a trapped position engaging against the base member, the catcher member being spring urged to the trapped position, a retention arrangement for retaining the catcher member in the set position, which retention arrangement can be disengaged by a mouse on the base member such that the catcher member traps the mouse against the base member, a lock arrangement manually selectively engagable with the catcher member to hold the catcher member in the set position, a handle part being provided on the catcher member which extends to one side of the base member.

2. A trap according to claim 1, in which the lock arrangement comprises a pivotally movable member selectively movable to a position against which the catcher member can engage to retain the same catcher member in the set position.

3. A trap according to claim 2, in which the lock arrangement member is pivotally mounted about an axis perpendicular to the base plate.

4. A trap according to claim 3, in which the lock arrangement is pivotally mounted to the base plate.

5. A trap according to claim 4, in which the lock arrangement is pivotally mounted to a part of the base plate beyond the base member.

6. A trap according to claim 2, in which the lock arrangement member is pivotally mounted about an axis parallel to the base plate, and may be mounted to the side of the base member.

7. A trap according to any of the preceding claims, in which the base plate includes an extra strip.

8. A trap according to claim 7, in which the extra strip is perpendicular to the base plate.

9. A trap according to claims 7 or 8, in which the extra strip is located on a one side of the base plate.

10. A trap according to any of claims 7 to 9, in which the lock arrangement member is pivotally mounted to the strip.

11. A trap according to any of the preceding claims, in which the catcher member comprises a profiled member, part of which defines the handle part.

12. A trap according to claim 11, in which the catcher member comprises a profiled elongate member.

13. A trap according to claim 12, in which the elongate member substantially extends in a rectangle, with the handle part extending outwardly from the rectangle.

14. A trap according to any of the preceding claims, in which the base member includes a trap part which is movably mounted to the remainder of the base member, with a part of the retention arrangement provided on the trap part such that movement thereof can disengage the retention arrangement.

15. A trap according to claim 14, in which a link member extends from the remainder of the base member to be selectively engagable with the trap part, and when engaged with the trap part can engage with the catcher member to retain same in the set position.
